# EUROPEAN PATENT APPLICATION

(11) **EP 2 085 908 A2**
(43) Date of publication of application: **05.08.2009**
(21) Application number: 08251930.7
(22) Date of filing: 04.06.2008
(51) Int. Cl.: G06F 21/20

(54) **Image password authentication system of portable electronic apparatus and method for the same**

(30) Priority: 02.02.2008 CN 200810007152
(71) Applicant: Mobinnova Corp, Taoyuan City, Taoyuan County 330 (TW)
(72) Inventor: Shih, Yung-Ho, S.E. Bellevue WA 98006 (US); Shen, Kuan-Hung, Taoyuan City Taoyuan County 300 (TW)
(74) Representative: Cheyne, John Robert Alexander M.

(57) **Abstract**

The present invention provides an image password authentication system of a portable electronic apparatus and a method for the same. An image with a plurality of image regions is stored in the portable electronic apparatus, and the image regions are selected on a touch panel to generate an authentication parameter. The authentication parameter comprises user-selected image regions, a sequence of user-selected image regions, an elapsed time of selection operation, and requested times of selection operation. The authentication parameter is stored in a database module and is used to verify a validation parameter which is generated when users select the plurality of image regions on the touch panel of the authentication system in operating the portable electronic apparatus. Hence, the image password authentication can be provided to replace the existing number-input or character-input password authentication scheme.

## Description

### BACKGROUND OF THE INVENTION

### 1. Field of the invention

The present invention relates to a password authentication method, and more particularly to a password authentication method for a portable electronic apparatus.

### 2. Description of the Prior Art

Recently with the rapidly development of mobile communication, the portable apparatuses are widely used in various fields. Therefore, functions such as document process, data storage, or E-mail use, etc. can be operated in the portable apparatuses instead of personal computers. Hence, privacy and security of the portable apparatuses is more and more important due to the amount of data stored in the portable apparatuses.

A number-input or character-input password authentication is generally used to verify the password, the PIN code, or the PUK code because operation interface of the portable apparatus is simple. However, it is difficult to memorize the authentication information for certain people, such as old persons, children, etc. and security issues might arise. Hence, many new-style and precise authentication methods, such as fingerprint identification, iris recognition, speaker recognition, and so on, have been developed in recent years.

Although these new-style and precise authentication techniques are advanced and convenient, the research and development costs and employment costs of products are high so that these authentication techniques are not generally used.

### SUMMARY OF THE INVENTION

The primary object of the present invention is to provide an image password authentication system of a portable electronic apparatus and a method for the same. An image with a plurality of image regions is stored in the portable electronic apparatus, and the image regions are sequentially selected on a touch panel to generate an authentication parameter. The authentication parameter comprises user-selected image regions, a sequence of user-selected image regions, an elapsed time of the selection operation, and requested times of selection operation. Hence, the image password authentication can be provided to replace the existing number-input or character-input password authentication.

To achieve the primary objective mentioned above, the authentication parameter is stored in a database module and is used to verify a validation parameter which is generated when users select the plurality of image regions on the touch panel of the authentication system in the future.

It is to be understood that both the foregoing general description and the following detailed description are exemplary, and are intended to provide further explanation of the invention as claimed. Other advantages and features of the invention will be apparent from the following description, drawings and claims.

### BRIEF DESCRIPTION OF THE DRAWINGS

The above and further advantages of this invention may be better understood by referring to the following description, taken in conjunction with the accompanying drawings, in which:
Fig. 1 is a block diagram of an image password authentication system of a portable electronic apparatus according to the present invention;
Fig. 2 is a flow chart of setting a validation parameter;
Fig. 3 is a flow chart of verifying the validation parameter and an authentication parameter;
Fig. 4 is a schematic view of a preferred embodiment of a geometric image;
Fig. 4A is a flow chart of verifying a validation parameter and the authentication parameter of another preferred embodiment;
Fig. 5A is a schematic view of another embodiment of a geometric image;
Fig. 5B is a schematic view of another embodiment of a geometric image; and
Fig. 5C is a schematic view of another embodiment of a geometric image.

The drawings will be described further in connection with the following detailed description of the present invention.

### DETAILED DESCRIPTION OF THE PREFERRED EMBODIMENTS

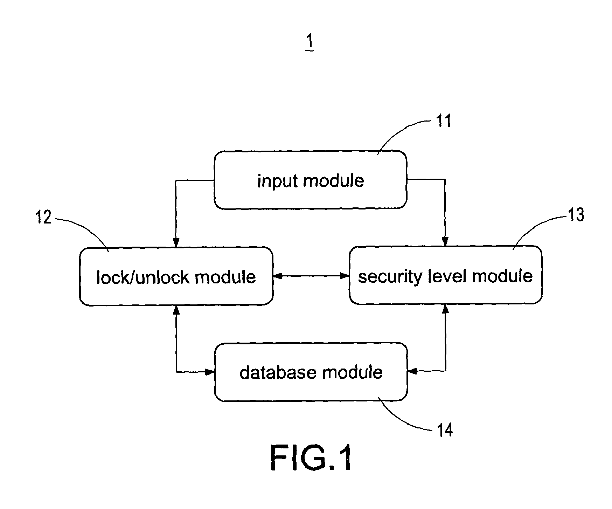

Reference is made to Fig. 1 which is a block diagram of an image password authentication system of a portable electronic apparatus according to the present invention. The portable electronic apparatus 1 comprises an input module 11, a lock/unlock module 12, a security level module 13, and database module 14. In this embodiment, the input module 11 is a touch panel and the database module 14 is a flash memory. It should be noted that the input module and the database module can be implemented in other ways.

The input module 11 is configured to display an image with a plurality of image regions; and the plurality of image regions of the image can be selected by users. Input actions including user-selected image regions, a sequence of user-selected image regions, and requested times of selection operation are delivered to the lock/unlock module 12; and the input actions are analyzed by the lock/unlock module 12 to generate an authentication parameter. Furthermore, the authentication parameter is delivered to the database module 14 for storing therein, and the authentication parameter is used to verify a validation parameter when user operating the authentication system later. The validation parameter is generated when users select the plurality of image regions on the input module 11. The security level module 13 is configured to set a complexity degree of the authentication parameter so as to enhance security of the authentication system when the complexity degree of the authentication parameter is concerned.

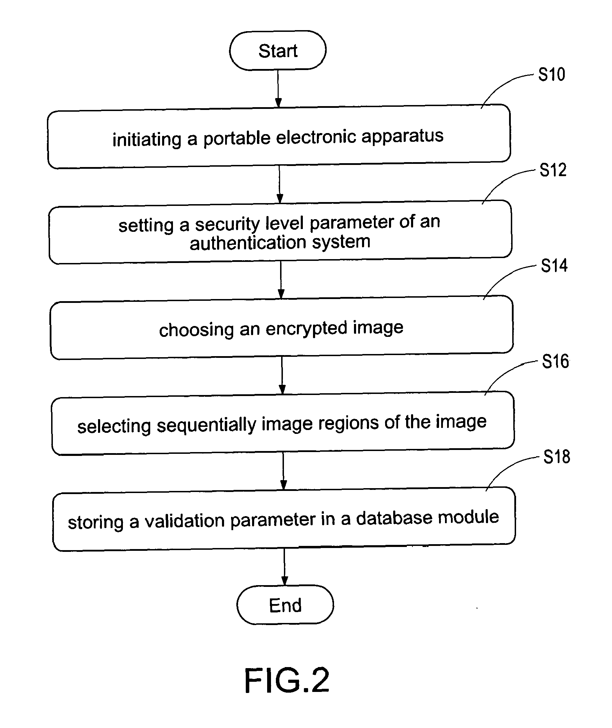

Reference is made to Fig. 2 which is a flow chart of setting a validation parameter. The portable electronic apparatus 1 is initiated when manufacturing (S10), namely, a plurality of images are pre-processed and stored in the portable electronic apparatus 1. A security level parameter is set and stored in the security level module 13 (S12), and the security level parameter determines a complexity degree of the authentication parameter. A user-selected image is encrypted (S14), wherein the user-selected image is one of the stored images in the portable electronic apparatus 1, and is selected to be encrypted. An image password is set (S16) to record user-selected image regions, a sequence of user-selected image regions so as to generate an authentication parameter. The security level of the authentication system is determined according to the security level parameter, namely, the requested times of selection operation is more that the security level is demanded to be higher. Hence, the disadvantage of fixed-length PIN code or PUK code in the existing portable electronic apparatus can be overcome and the security degree for the portable electronic apparatus can be enhanced.

Furthermore, an elapsed time of selection operation can be calculated to further enhance security level of the portable electronic apparatus when the step (S16) is executed. The calculated elapsed time is recorded and then stored as one part of the authentication parameter when the step (S 16) is finished. To input a complete image password, not only the validation parameter and the authentication parameter should be matched, but also the recorded elapsed time should be within range of the allowable tolerance. Therefore, the authentication process is completely finished.

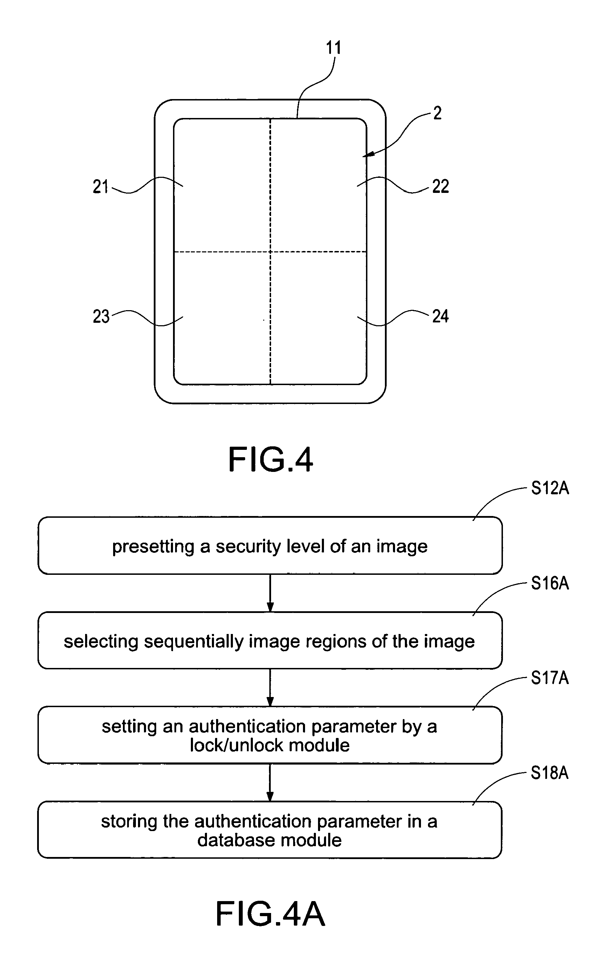

Reference is made to Fig. 4 and Fig. 4A. Fig. 4 is a schematic view of a preferred embodiment of a geometric image and Fig. 4A is a flow chart of verifying a validation parameter and the authentication parameter of another preferred embodiment. A security level of an image is preset when the portable electronic apparatus 1 is manufactured (S12A), so that a geometric image 2 (shown in Fig. 4) is displayed on the input module 11 when the portable electronic apparatus 1 is used for the first time. The geometric image 2 is pre-divided into four separate and touch-sensible regions 21, 22, 23, and 24, namely, top-left region, top-right region, down-left region, and down-right region, respectively, to be selected by users (S16A). An authentication parameter is generated by the lock/unlock module 12 (S17A) according to the user-selected regions and then the authentication parameter is stored in a database (S18A).

In another embodiment, a security level parameter can be set in which users need to sequentially select five regions (the requested times is five). For example, top-right region 22, top-right region 22, top-left region 21, down-left region 23, and down-right region 24 of the geometric image 2 are selected and five seconds are elapsed for a selection operation. Hence, these user-selected data are transformed into a validation parameter and which are stored in the database module 14 (S 18), and the validation parameter is used to verify the authentication parameter when an unlock procedure is executed by users.

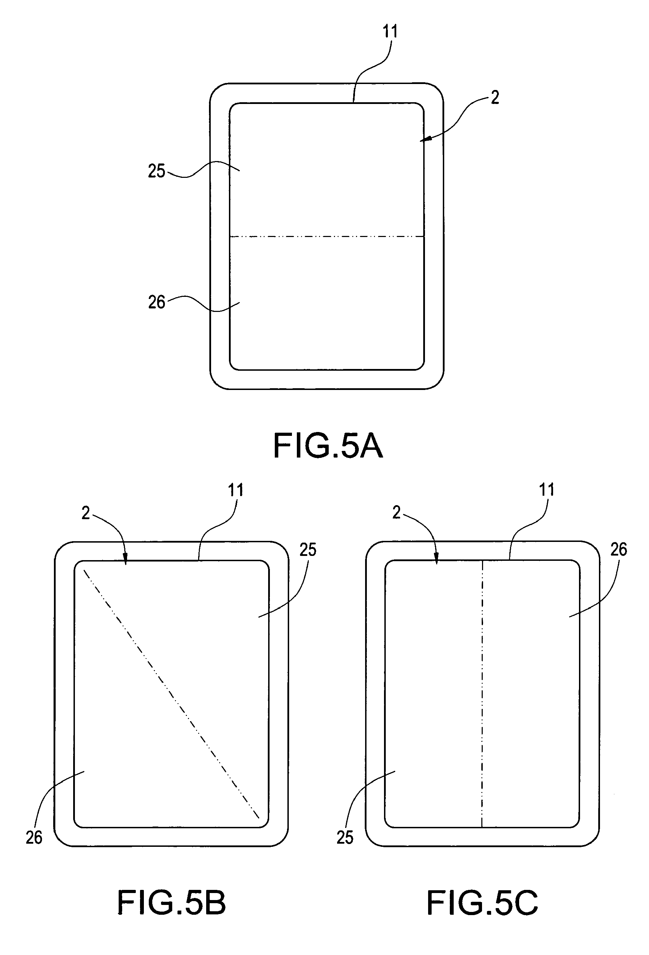

Reference is made to Fig. 5A, Fig. 5B, and Fig. 5C. The geometric image 2 can be divided into at least two geometry regions 25, 26 of equal partition along the horizontal, vertical, or diagonal direction, wherein a boundary is preferably invisible between the geometry regions 25, 26 on the input module 11. In addition, the geometric image 2 can be also divided into four regions 21, 22, 23, and 24 (shown in Fig. 4) of equal partition to be selected so that the complexity degree of the authentication parameter is raised to enhance security degree of the portable electronic apparatus 1. Hence, a directional or a quadrantal user-selected operation provides a various combination of the image password in a lock procedure.

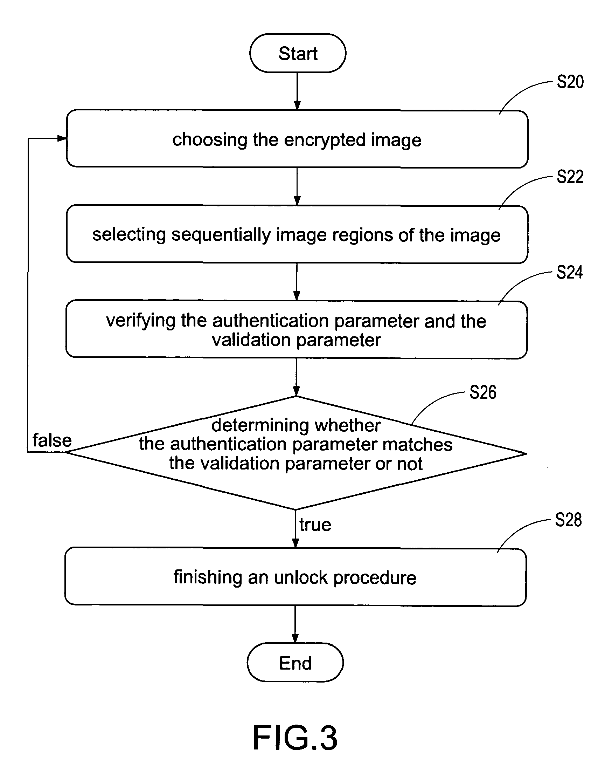

Reference is made to Fig. 3 which is a flow chart of verifying the validation parameter based on a stored authentication parameter. An unlock procedure is executed by users (S20) when the portable electronic apparatus 1 is used, that is an encrypted image is chosen. The plurality of image regions of the encrypted geometric image 2 is sequentially selected (S22) for some time to generate a validation parameter. Afterward, the validation parameter is analyzed by the lock/unlock module 12 and is delivered to the database module 14 to be store. The stored authentication parameter is also provided to verify the validation parameter (S24). If the authentication parameter matches with the validation parameter (S26), an unlock procedure is finished to operate the portable electronic apparatus (S28); if the authentication parameter doesn't match with the validation parameter (S26), the unlock procedure has to be repeated (S20).

## Claims

1. An image password authentication system of a portable electronic apparatus (1), comprising:
an input module (11) configured to display an image with a plurality of image regions (21, 22, 23, 24), to receive user-selected data indicating user-selected image regions, a sequence of user-selected image regions, and an elapsed time of selection operation;
a lock/unlock module (12) electrically connected to the input module (11) and configured to analyze the user-selected data from the input module (11) to generate an authentication parameter; and
a database module (14) electrically connected to the lock/unlock module (12) and configured to receive and store the authentication parameter.

2. The image password authentication system in claim 1, wherein the plurality of image regions (21, 22, 23, 24) can be divided into at least two geometry regions of equal partition.

3. The image password authentication system in claim 1, further comprising a security level module (13) electrically connected to the input module (11) and the lock/unlock module (12), and the security level module (13) is configured to set a complexity degree of an image password to determine a security level of the authentication system.

4. The image password authentication system in claim 3, wherein the complexity degree of the image password comprises requested times to select the image regions (21, 22, 23, 24), and the authentication parameter further comprises requested times of selection operation.

5. The image password authentication system in claim 1, wherein the input module (11) is a touch panel.

6. The image password authentication system in claim 1, wherein the database module (14) is a flash memory.

7. An image authentication method of a portable electronic apparatus, the portable electronic apparatus being provided with at least one image and a touch panel to display the image, the image being divided into a plurality of image regions for user selection operation, the method comprising the steps of:
a. receiving data signals indicating selected image regions so as to set an authentication parameter; and
b. storing the authentication parameter in a database module.

8. The image authentication method in claim 7, wherein the portable electronic apparatus comprises a plurality of images, and the images can be displayed on the touch panel, and each of the images is divided into a plurality of image regions for user selection.

9. The image authentication method in claim 7, wherein the plurality of image regions can be divided into at least two geometry regions of equal partition.

10. The image authentication method in claim 8, wherein the step (a) comprises the steps of:
a1. storing a security level parameter;
a2. receiving a selected image on the touch panel;
a3. receiving user-selected data indicating sequentially-selected image regions according to the security level parameter after the step (a2), and setting an authentication parameter according to the received data.

11. The image authentication method in claim 10, wherein the authentication parameter comprises user-selected image regions, a sequence of user-selected image regions, and requested times of selection operation.

12. The image authentication method in claim 10, wherein the set parameter further comprises an elapsed time of selection operation.

13. The image authentication method in claim 7, further comprising the steps following when the mobile apparatus receiving an unlock signal after the step (b):
c. receiving user-selected data indicating selecting the image regions so as to set a validation parameter;
d. verifying the authentication parameter and the validation parameter;
e. completing an unlock action when the authentication parameter is matched with the validation parameter after the step (d);
f. displaying a standby screen of the portable electronic apparatus after the step (e);
g. repeating the step (c) to the step (d) when the validation parameter is not matched with the authentication parameter after the step (d).

14. The image authentication method in claim 13, wherein the step (c) comprising the steps of:
c1. receiving a selected image on the touch panel; and
c2. receiving the user-selected data indicating sequentially-selected image regions and setting a validation parameter according to the received data signals.

15. The image authentication method in claim 13, wherein the validation parameter comprises the user-selected image regions, the sequence of user-selected image regions, and the requested times of selection operation.

16. The image authentication method in claim 13, wherein the validation parameter further comprises an elapsed time of selection operation.
